# EUROPEAN PATENT APPLICATION

(11) **EP 3 995 859 A1**
(43) Date of publication of application: **11.05.2022**
(21) Application number: 20856659.6
(22) Date of filing: 28.08.2020
(51) Int. Cl.: G01S 17/93, G01S 17/02

(54) **RANGING METHOD FOR LIDAR SYSTEM, AND LIDAR SYSTEM**

(30) Priority: 30.08.2019 CN 201910815137
(71) Applicant: Hesai Technology Co., Ltd., Shanghai 201821 (CN)
(72) Inventor: SUN, Kai, Shanghai 201821 (CN); XIANG, Shaoqing, Shanghai 201821 (CN)
(74) Representative: Appelt, Christian W.
(86) International application number: PCT/CN2020/112138
(87) International publication number: WO 2021/037211

(57) **Abstract**

The present invention relates to the field of ranging, and in particular, to a ranging method for a lidar system, and a lidar system. The ranging method for a lidar system includes: emitting a first pulse having a first energy (102); receiving an echo signal corresponding to the first pulse (104); determining, according to the echo signal, whether a preset distance has an obstacle (106); and emitting a second pulse having a second energy in an emission direction of the first pulse corresponding to the determined echo signal when no obstacle is determined within the preset distance, the second energy being greater than the first energy, and not emitting the second pulse in the emission direction of the first pulse corresponding to the determined echo signal when an obstacle is determined within the preset distance (108). Therefore, without increasing the complexity of the system structure, a lidar can satisfy safety requirements for human eyes while increasing the single-pulse energy threshold of a ranging pulse, thereby ensuring telemetering performance and reducing costs.

## Description

### TECHNICAL FIELD

The present invention relates to the field of ranging, and in particular, to a ranging method for a lidar system, and a lidar system.

### BACKGROUND

As a high-precision active three-dimensional imaging sensor, a lidar has the characteristics of high resolution and high immunity against environmental interference. The lidar calculates a distance by measuring the time of flight of a laser pulse in space. Generally, a rotary lidar emits a laser from an optical window. The lidar emits lasers in different vertical directions while rotating, so as to obtain three-dimensional distance information. The ranging performance of the lidar largely depends on the energy level of the laser pulse. In addition, the lidar needs to meet the Class 1 level defined by the laser product safety standard IEC60825-1, that is, safety for human eyes. A laser energy threshold corresponding to safety for human eyes is related to the number of laser pulses received by human eyes per unit time. When the number of laser pulses received by human eyes per unit time is relatively large, the single-pulse energy threshold of the laser is relatively low. In view of the restriction, the existing solutions include: (1) using an auxiliary light source; (2) controlling temporally adjacent pulses to be separated in space.

The method of using an auxiliary light source includes: using an auxiliary light source that is different in wavelength from the ranging light source (for example, the ranging light source is in an infrared waveband and the auxiliary light source is in a visible light waveband) and emits light in the same direction as the ranging light source, to enable human eyes to actively avoid the ranging light source; or using an auxiliary light source that does not emit light in the same direction as the ranging light source (for example, emits light around the ranging light source) for early warning and detection. However, the foregoing methods increase the complexity of the system structure.

The method of controlling temporally adjacent pulses to be separated in space is mostly applicable to a single-pulse lidar. However, to cope with interference, existing lidars need to emit a pulse sequence every time. Therefore, the foregoing manners cannot effectively resolve the issue regarding safety for human eyes.

### SUMMARY

An objective of the present invention is to provide a ranging method for a lidar system, and a lidar system. Without increasing the complexity of the system structure, the lidar satisfies safety requirements for human eyes while improving the single-pulse energy threshold of the ranging pulse, thereby ensuring telemetering performance and achieving low implementation costs.

The present invention discloses a ranging method for a lidar system, including:
emitting a first pulse having a first energy;
receiving an echo signal corresponding to the first pulse;
determining, according to the echo signal, whether a preset distance has an obstacle; and
emitting a second pulse having a second energy in an emission direction of the first pulse corresponding to the determined echo signal when no obstacle is determined within the preset distance, the second energy being greater than the first energy, and not emitting the second pulse in the emission direction of the first pulse corresponding to the determined echo signal when an obstacle is determined within the preset distance.

Optionally, the determining, according to the echo signal, whether a preset distance has an obstacle includes:
calculating a time difference between a receiving time of the echo signal and an emitting time of the corresponding first pulse; and
determining whether the time difference is greater than a first preset time difference, where
an obstacle within the preset distance is determined when the time difference is greater than the first preset time difference, and an obstacle within the preset distance is not determined when the time difference is less than or equal to the first preset time difference.

Optionally, when the second pulse is not emitted in the emission direction of the first pulse corresponding to the determined echo signal, the second pulse is not emitted in another direction within a range of a predetermined angle that deviates from the emission direction of the first pulse corresponding to the determined echo signal.

Optionally, the first pulse is a first single pulse or a first pulse sequence, and the second pulse is a second single pulse or a second pulse sequence.

Optionally, when the first pulse is the first single pulse, energy of the first single pulse is the first energy; when the first pulse is the first pulse sequence, a sum of energy of all single pulses in the first pulse sequence is the first energy;
when the second pulse is the second single pulse, energy of the second single pulse is the second energy; and when the second pulse is the second pulse sequence, a sum of energy of all single pulses in the second pulse sequence is the second energy.

Optionally, when the first pulse is the first single pulse, and the second pulse is the second single pulse, the energy of the first single pulse is less than or equal to a threshold of laser safety for human eyes, and the energy of the second single pulse is greater than the energy of the first single pulse;
when the first pulse is the first pulse sequence, and the second pulse is the second pulse sequence, the sum of the energy of all the single pulses in the first pulse sequence is less than or equal to the threshold of laser safety for human eyes, and the sum of the energy of all the single pulses in the second pulse sequence is greater than the sum of the energy of all the single pulses in the first pulse sequence;
when the first pulse is the first single pulse, and the second pulse is the second pulse sequence, the energy of the first single pulse is less than or equal to the threshold of laser safety for human eyes, and the sum of the energy of all the single pulses in the second pulse sequence is greater than the energy of the first single pulse; and
when the first pulse is the first pulse sequence, and the second pulse is the second single pulse, the sum of the energy of all the single pulses in the first pulse sequence is less than or equal to the threshold of laser safety for human eyes, and the energy of the second single pulse is greater than the sum of the energy of all the single pulses in the first pulse sequence.

The present invention discloses a lidar system, including an emitting unit, a receiving unit, a signal processing unit, and a control unit, where
the control unit is configured to control the emitting unit to emit a first pulse having a first energy;
the receiving unit is configured to receive an echo signal corresponding to the first pulse;
the signal processing unit is configured to determine, according to the echo signal, whether a preset distance has an obstacle; and
when the signal processing unit determines that the preset distance has no obstacle, the control unit controls the emitting unit to emit a second pulse having a second energy in an emission direction of the first pulse corresponding to the determined echo signal, the second energy being greater than the first energy, and when the signal processing unit determines that the preset distance has an obstacle, the control unit controls the emitting unit not to emit the second pulse in the emission direction of the first pulse corresponding to the determined echo signal.

Optionally, the signal processing unit determines, according to the echo signal, whether a preset distance has an obstacle includes:
calculating a time difference between a receiving time of the echo signal and an emitting time of the corresponding first pulse; and
determining whether the time difference is greater than a first preset time difference, where
an obstacle within the preset distance is determined when the time difference is greater than the first preset time difference, and an obstacle within the preset distance is not determined when the time difference is less than or equal to the first preset time difference.

Optionally, when the control unit controls the emitting unit not to emit the second pulse in the emission direction of the first pulse corresponding to the determined echo signal, the control unit controls the emitting unit not to emit the second pulse in another direction within a range of a predetermined angle that deviates from the emission direction of the first pulse corresponding to the determined echo signal.

Optionally, the first pulse is a first single pulse or a first pulse sequence, and the second pulse is a second single pulse or a second pulse sequence.

Optionally, when the first pulse is the first single pulse, energy of the first single pulse is the first energy; when the first pulse is the first pulse sequence, a sum of energy of all single pulses in the first pulse sequence is the first energy;
when the second pulse is the second single pulse, energy of the second single pulse is the second energy; and when the second pulse is the second pulse sequence, a sum of energy of all single pulses in the second pulse sequence is the second energy.

Optionally, when the first pulse is the first single pulse, and the second pulse is the second single pulse, the energy of the first single pulse is less than or equal to a threshold of laser safety for human eyes, and the energy of the second single pulse is greater than the energy of the first single pulse;
when the first pulse is the first pulse sequence, and the second pulse is the second pulse sequence, the sum of the energy of all the single pulses in the first pulse sequence is less than or equal to the threshold of laser safety for human eyes, and the sum of the energy of all the single pulses in the second pulse sequence is greater than the sum of the energy of all the single pulses in the first pulse sequence;
when the first pulse is the first single pulse, and the second pulse is the second pulse sequence, the energy of the first single pulse is less than or equal to the threshold of laser safety for human eyes, and the sum of the energy of all the single pulses in the second pulse sequence is greater than the energy of the first single pulse; and
when the first pulse is the first pulse sequence, and the second pulse is the second single pulse, the sum of the energy of all the single pulses in the first pulse sequence is less than or equal to the threshold of laser safety for human eyes, and the energy of the second single pulse is greater than the sum of the energy of all the single pulses in the first pulse sequence.

Compared with the prior art, main differences and effects of the present invention are as follows.

A lidar system first emits one or more first pulses having relatively low energies, receives one or more echo signals corresponding to the one or more first pulses, and determines, according to the one or more echo signals, whether a preset distance has an obstacle. According to certain standards of laser safety for human eyes, a threshold of lidar safety for human eyes is generally impacted by a relatively short distance. Therefore, a second pulse having a relatively high energy is emitted in an emission direction of the first pulse corresponding to the determined echo signal when no obstacle is determined within the preset distance, and the second pulse is not emitted in the emission direction of the first pulse corresponding to the determined echo signal when an obstacle is determined within the preset distance. Therefore, there is no need to use an auxiliary light source in the lidar system, and the complexity of the system structure is not increased. The energy of the first pulse is relatively low, which satisfies safety requirements for human eyes. The energy of the second pulse is relatively high, which increases a single-pulse energy threshold of a ranging pulse, thereby ensuring telemetering performance, and achieving low implementation costs of ranging of the lidar system.

The lidar system may calculate a time difference between a receiving time of each echo signal and an emitting time of a corresponding first pulse, and determine whether the time difference is greater than a first preset time difference, to determine whether the preset distance has an obstacle. Therefore, it can be easily determined with a high accuracy whether the preset distance has an obstacle.

When the second pulse is not emitted in the emission direction of the first pulse corresponding to the determined echo signal, the lidar system does not emit the second pulse in one or more directions within a range of a predetermined angle that deviate from the emission direction of the first pulse corresponding to the determined echo signal. Therefore, when the obstacle is a person, the lidar system can avoid the angular section corresponding to human eyes to further ensure safety for human eyes.

### BRIEF DESCRIPTION OF THE DRAWINGS

FIG. 1 illustrates a flowchart of a ranging method for a lidar system according to a first embodiment of the present invention;
FIG. 2 illustrates a schematic diagram of determining whether a preset distance has an obstacle according to a first embodiment of the present invention;
FIG. 3 illustrates a schematic diagram illustrating a case in which a second pulse is not emitted in one or more directions within a range of a predetermined angle that deviate from an emission direction of a first pulse corresponding to a determined echo signal according to a first embodiment of the present invention;
FIG. 4 illustrates a schematic diagram of a first pulse and a second pulse according to a first embodiment of the present invention; and
FIG. 5 illustrates a functional diagram of a lidar system according to a second embodiment of the present invention.

### DETAILED DESCRIPTION

To make the objectives and technical solutions of the embodiments of the present invention more apparent, the following disclosures clearly and completely describe the technical solutions in the embodiments of the present invention with reference to the accompanying drawings associated with the embodiments of the present invention. Apparently, the described embodiments are some but not all of the embodiments of the present invention. All other embodiments that may be obtained by a person of ordinary skill in the art based on the embodiments of the present invention without creative efforts shall fall within the protection scope of the present invention.

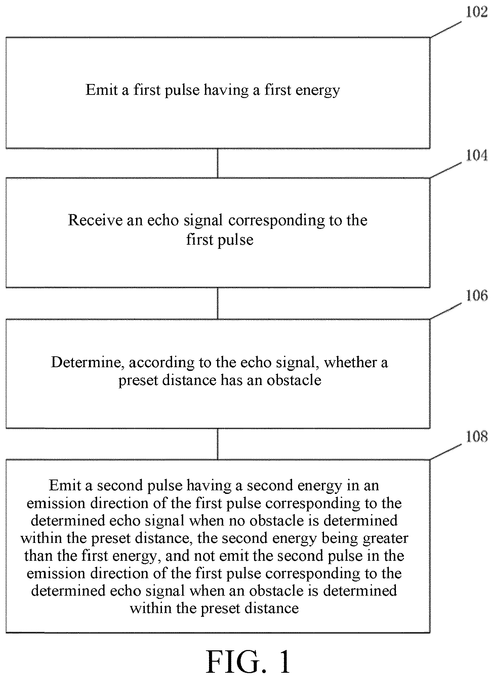

A first embodiment of the present invention relates to a ranging method for a lidar system. FIG. 1 illustrates a flowchart of a ranging method for a lidar system according to a first embodiment of the present invention.

Specifically, as shown in FIG. 1, the ranging method for a lidar system includes the following steps:
Step 102: Emit a first pulse having a first energy.
Step 104: Receive an echo signal corresponding to the first pulse.
Step 106: Determine, according to the echo signal, whether a preset distance has an obstacle.
Step 108: Emit a second pulse having a second energy in an emission direction of the first pulse corresponding to the determined echo signal when no obstacle is determined within the preset distance, the second energy being greater than the first energy, and not emit the second pulse in the emission direction of the first pulse corresponding to the determined echo signal when an obstacle is determined within the preset distance.

The lidar system can emit a laser pulse within a specific angle range. For example, a horizontal field of view of the lidar system may be 360°, and a vertical field of view of the lidar system may be 40° (for example, from -25° to +15°). It may be understood that the horizontal field of view and the vertical field of view of the lidar system may be adjusted according to actual requirements, which is not limited herein.

The lidar system may emit one or more first pulses having first energies in one or more directions, and each first pulse having the first energy corresponds to a direction of a vertical field of view. For example, when rotating to 45° in a horizontal direction, the lidar system can sequentially emit the first pulses having the first energies (that is, emit only one first pulse having the first energy at a time) along a range of the vertical field of view (from -25° to +15°). In another example, when rotating to 45° in a horizontal direction, the lidar system may simultaneously emit a plurality of first pulses having the first energies, for example, four first pulses, along a range of the vertical field of view (from -25° to +15°). Directions of vertical field of views of the four first pulses having the first energies should be separated as much as possible to reduce a possibility that the four first pulses are simultaneously received by eyes. Certainly, the lidar system may alternatively emit one or more first pulses having the first energies within a partial range of the vertical field of view (for example, from -5° to +5°). It may be understood that emission directions and the number of the first pulses may be adjusted according to actual requirements, which is not limited herein.

For example, the lidar system emits four first pulses having the first energies at 45° in a horizontal direction and -25° to +15° in a vertical direction, receives four echo signals corresponding to the four first pulses, and respectively determines, according to the four echo signals, whether the preset distance has an obstacle. If it is respectively determined, according to two of the echo signals, that the preset distance has no obstacle, second pulses having second energies are emitted in emission directions of the first pulses corresponding to the two determined echo signals. The second energy is greater than the first energy. If it is respectively determined, according to the remaining two echo signals, that the preset distance has an obstacle, the second pulses are not emitted in emission directions of the first pulses corresponding to the two determined echo signals.

The lidar system first emits one or more first pulses having relatively low energies, receives one or more echo signals corresponding to the one or more first pulses, and determines, according to the one or more echo signals, whether the preset distance has an obstacle. Because the power of the laser entering pupils of the eyes attenuates with a distance, according to certain standards of laser safety for human eyes, a threshold of laser safety for human eyes is generally impacted by a relatively short distance. Therefore, when no obstacle is determined within a preset relatively short distance, a second pulse having a relatively high energy is emitted in an emission direction of the first pulse corresponding to the determined echo signal, and when an obstacle is determined within the preset relatively short distance, the second pulse is not emitted in the emission direction of the first pulse corresponding to the determined echo signal. Therefore, there is no need to use an auxiliary light source in the lidar system, and the complexity of the system structure is not increased. The energy of the first pulse is relatively low, which satisfies safety requirements for human eyes. The energy of the second pulse is relatively high, which increases a single-pulse energy threshold of a ranging pulse, thereby ensuring telemetering performance, and achieving low implementation costs of ranging of the lidar system.

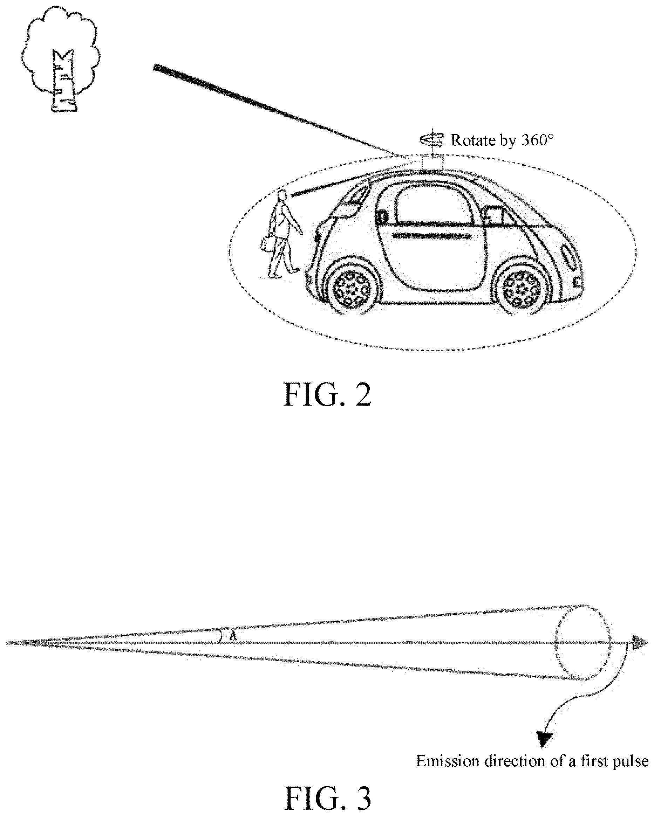

FIG. 2 illustrates a schematic diagram of determining whether a preset distance has an obstacle according to a first embodiment of the present invention.

Specifically, as shown in FIG. 2, the lidar system may be disposed on a vehicle, for example, disposed at a top position of the vehicle. A horizontal field of view of the lidar system may be 360°. The lidar system may optionally be disposed around a body of the vehicle. A dashed line in FIG. 2 indicates the preset distance. The preset distance may be determined according to factors such as the magnitude of the energy of the first pulse, the spot size, and a threshold of laser safety for human eyes. For example, the preset distance may be 1.5 m, and the dashed line in FIG. 2 is 1.5 m from a center of the lidar system.

For example, the lidar system may simultaneously emit two first pulses having the first energies in different vertical angle directions, receive two echo signals corresponding to the two first pulses, and respectively determine, according to the two echo signals, whether the preset distance has an obstacle. If no obstacle is determined within 1.5 m according to one of the echo signals, a second pulse having the second energy is emitted in an emission direction of the first pulse corresponding to the determined echo signal. The second energy is greater than the first energy. If no obstacle is determined within 1.5 m according to the other echo signal, the second pulse is not emitted in an emission direction of the first pulse corresponding to the determined echo signal.

The determining, according to the echo signal, whether a preset distance has an obstacle includes:
calculating a time difference between a receiving time of the echo signal and an emitting time of the corresponding first pulse; and
determining whether the time difference is greater than a first preset time difference, where
an obstacle within the preset distance is determined when the time difference is greater than the first preset time difference, and an obstacle within the preset distance is not determined when the time difference is less than or equal to the first preset time difference.

The first preset time difference may be calculated according to a time-of-flight method Δt=2^{∗}d/c, where Δt is the first preset time difference, d is the preset distance, and c is a speed of light. For example, if the preset distance is 1.5 m, the first preset time difference is 10 ns, so that it is determined, according to one or more echo signals, whether the preset distance has an obstacle. It may be understood that the first preset time difference may be jointly determined according to a time of flight and a delay of the lidar system.

For example, the lidar system may simultaneously emit two first pulses having the first energies in different vertical angle directions, receive two echo signals corresponding to the two first pulses, and calculate a time difference between a receiving time of each echo signal and an emitting time of a corresponding first pulse. If a time difference between a receiving time of one of the echo signals and an emitting time of a corresponding first pulse is greater than 10 ns, no obstacle is determined within the preset distance (for example, 1.5 m), and a second pulse having the second energy is emitted in an emission direction of the first pulse corresponding to the determined echo signal. The second energy is greater than the first energy. If a time difference between a receiving time of the other echo signal and an emitting time of a corresponding first pulse is less than or equal to 10 ns, an obstacle is determined within the preset distance (for example, 1.5 m), and a second pulse is not emitted in an emission direction of the first pulse corresponding to the determined echo signal.

The lidar system may calculate a time difference between a receiving time of each echo signal and an emitting time of a corresponding first pulse, and determine whether the time difference is greater than a first preset time difference, to determine whether the preset distance has an obstacle. Therefore, it can be easily determined with a high accuracy whether the preset distance has an obstacle.

FIG. 3 illustrates a schematic diagram illustrating a case in which a second pulse is not emitted in one or more directions within a range of a predetermined angle that deviate from an emission direction of a first pulse corresponding to a determined echo signal according to a first embodiment of the present invention.

Specifically, as shown in FIG. 3, an arrow direction is the emission direction of the first pulse corresponding to the determined echo signal. When the second pulse is not emitted in the emission direction of the first pulse, the second pulse is not emitted in one or more directions within a range of a predetermined angle A that deviate from the emission direction of the first pulse. Therefore, a cone may be formed by using a light source of the lidar system as a vertex, the emission direction of the first pulse as a cone axis, and the predetermined angle A as a cone half-angle, so that the second pulse is not emitted in one or more directions within the cone.

When the second pulse is not emitted in emission directions of a plurality of first pulses, the second pulse is not emitted in one or more directions within ranges of predetermined angles A that deviate from the emission directions of the plurality of first pulses. Therefore, a plurality of cones may be formed by using a light source of the lidar system as a vertex, the emission directions of the plurality of first pulses as cone axes, and the predetermined angles A as cone half-angles, so that the second pulse is not emitted in one or more directions within the plurality of cones.

The one or more directions within the cone may be in the same vertical plane as the emission direction of the first pulse. It may be understood that the one or more directions within the cone may be adjusted according to actual requirements, which is not limited herein. For example, the second pulse is not emitted in all directions within the cone.

The predetermined angle A may be a value such as 0.1° indicating a horizontal or vertical angular resolution. It may be understood that the predetermined angle A may be adjusted according to actual requirements, which is not limited herein.

For example, the emission direction of the first pulse corresponding to the determined echo signal is 45° in a horizontal direction and 0° in a vertical direction. When the second pulse is not emitted in the direction, the second pulse is not emitted in one or more directions that are 45° in a horizontal direction and within a range of -0.1° to +0.1° in a vertical direction.

For example, emission directions of three first pulses corresponding to determined echo signals are respectively 45° in a horizontal direction and 0° in a vertical direction, 45° in a horizontal direction and -10° in a vertical direction, and 45° in a horizontal direction and +10° in a vertical direction. When the second pulse is not emitted in the three directions, the second pulse is not emitted in one or more directions that are at 45° in a horizontal direction and within a range of -0.1° to +0.1° in a vertical direction, 45° in a horizontal direction and within a range of -10.1° to -9.9° in a vertical direction, and 45° in a horizontal direction and within a range of +9.9° to +10.1° in a vertical direction.

When the second pulse is not emitted in the emission direction of the first pulse corresponding to the determined echo signal, the lidar system does not emit the second pulse in one or more directions within a range of a predetermined angle that deviate from the emission direction of the first pulse corresponding to the determined echo signal. Therefore, when the obstacle is a person, the lidar system can avoid the angular section corresponding to human eyes to further ensure safety for human eyes.

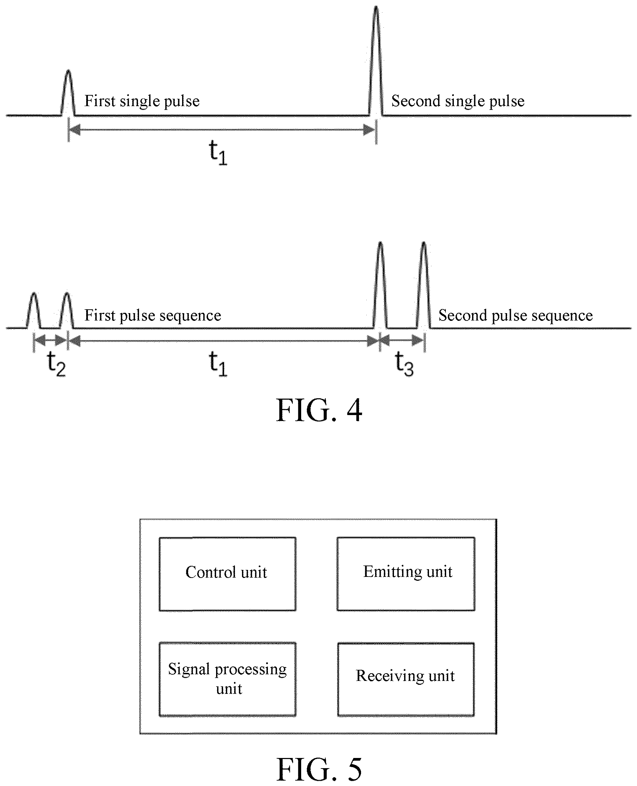

FIG. 4 illustrates a schematic diagram of a first pulse and a second pulse according to a first embodiment of the present invention.

The first pulse may be a first single pulse or a first pulse sequence, and the second pulse may be a second single pulse or a second pulse sequence.

When the first pulse is the first single pulse, energy of the first single pulse is the first energy; when the first pulse is the first pulse sequence, a sum of energy of all single pulses in the first pulse sequence is the first energy;
when the second pulse is the second single pulse, energy of the second single pulse is the second energy; and when the second pulse is the second pulse sequence, a sum of energy of all single pulses in the second pulse sequence is the second energy.

When the first pulse is the first single pulse, and the second pulse is the second single pulse, the energy of the first single pulse is less than or equal to a threshold of laser safety for human eyes, and the energy of the second single pulse is greater than the energy of the first single pulse.

When the first pulse is the first pulse sequence, and the second pulse is the second pulse sequence, the sum of the energy of all the single pulses in the first pulse sequence is less than or equal to the threshold of laser safety for human eyes, and the sum of the energy of all the single pulses in the second pulse sequence is greater than the sum of the energy of all the single pulses in the first pulse sequence.

When the first pulse is the first single pulse, and the second pulse is the second pulse sequence, the energy of the first single pulse is less than or equal to the threshold of laser safety for human eyes, and the sum of the energy of all the single pulses in the second pulse sequence is greater than the energy of the first single pulse.

When the first pulse is the first pulse sequence, and the second pulse is the second single pulse, the sum of the energy of all the single pulses in the first pulse sequence is less than or equal to the threshold of laser safety for human eyes, and the energy of the second single pulse is greater than the sum of the energy of all the single pulses in the first pulse sequence.

A pulse sequence may include two or more single pulses. It may be understood that the number of single pulses in the pulse sequence may be adjusted according to actual requirements, which is not limited herein.

Specifically, as shown in the upper part of FIG. 4, the first pulse is the first single pulse, the second pulse is the second single pulse, the energy of the first single pulse is the first energy, the energy of the second single pulse is the second energy, the first energy is less than or equal to a threshold of laser safety for human eyes, and the second energy is greater than the first energy. For example, the second energy may be more than 10 times the first energy. It may be understood that a ratio of the second energy to the first energy may be adjusted according to actual requirements, which is not limited herein.

A time difference between an emitting time of the first single pulse and an emitting time of the second single pulse is a second preset time difference t1. The second preset time difference t1 is greater than or equal to the first preset time difference. For example, the second preset time difference t1 may be determined according to the first preset time difference and a signal processing speed of the lidar system.

Specifically, as shown in the lower part of FIG. 4, the first pulse is the first pulse sequence, the second pulse is the second pulse sequence, the sum of the energy of all the single pulses in the first pulse sequence is the first energy, the sum of the energy of all the single pulses in the second pulse sequence is the second energy, the first energy is less than or equal to a threshold of laser safety for human eyes, and the second energy is greater than the first energy. For example, the second energy may be more than 10 times the first energy. It may be understood that a ratio of the second energy to the first energy may be adjusted according to actual requirements, which is not limited herein.

Energies of the single pulses in the first pulse sequence may be the same or may be different, and energies of the single pulses in the second pulse sequence may be the same or may be different.

A time difference between an emitting time of the last single pulse in the first pulse sequence and an emitting time of the first single pulse in the second pulse sequence is a second preset time difference t1. The second preset time difference t1 is greater than or equal to the first preset time difference. For example, the second preset time difference t1 may be determined according to the first preset time difference and a signal processing speed of the lidar system.

A time interval t2 between the single pulses in the first pulse sequence may be the same as or may be different from a time interval t3 between the single pulses in the second pulse sequence.

Specifically, not shown in the figure, the first pulse is the first single pulse, the second pulse is the second pulse sequence, the energy of the first single pulse is the first energy, the sum of the energy of all the single pulses in the second pulse sequence is the second energy, the first energy is less than or equal to a threshold of laser safety for human eyes, and the second energy is greater than the first energy. For example, the second energy may be more than 10 times the first energy. It may be understood that a ratio of the second energy to the first energy may be adjusted according to actual requirements, which is not limited herein.

Energies of the single pulses in the second pulse sequence may be the same or may be different.

Specifically, not shown in the figure, the first pulse is the first pulse sequence, the second pulse is the second single pulse, the sum of the energy of all the single pulses in the first pulse sequence is the first energy, the energy of the second single pulse is the second energy, the first energy is less than or equal to a threshold of laser safety for human eyes, and the second energy is greater than the first energy. For example, the second energy may be more than 10 times the first energy. It may be understood that a ratio of the second energy to the first energy may be adjusted according to actual requirements, which is not limited herein.

Energies of the single pulses in the first pulse sequence may be the same or may be different.

A second embodiment of the present invention relates to a lidar system. FIG. 5 illustrates a functional diagram of a lidar system according to a second embodiment of the present invention.

Specifically, as shown in FIG. 5, the lidar system includes an emitting unit, a receiving unit, a signal processing unit, and a control unit.

The control unit is configured to control the emitting unit to emit a first pulse having a first energy.

The receiving unit is configured to receive an echo signal corresponding to the first pulse.

The signal processing unit is configured to determine, according to the echo signal, whether a preset distance has an obstacle.

When the signal processing unit determines that the preset distance has no obstacle, the control unit controls the emitting unit to emit a second pulse having a second energy in an emission direction of the first pulse corresponding to the determined echo signal, the second energy being greater than the first energy, and when the signal processing unit determines that the preset distance has an obstacle, the control unit controls the emitting unit not to emit the second pulse in the emission direction of the first pulse corresponding to the determined echo signal.

That the signal processing unit determines, according to the echo signal, whether a preset distance has an obstacle includes:
calculating a time difference between a receiving time of the echo signal and an emitting time of the corresponding first pulse; and
determining whether the time difference is greater than a first preset time difference, where
an obstacle within the preset distance is determined when the time difference is greater than the first preset time difference, and an obstacle within the preset distance is determined when the time difference is less than or equal to the first preset time difference.

When the control unit controls the emitting unit not to emit the second pulse in the emission direction of the first pulse corresponding to the determined echo signal, the control unit controls the emitting unit not to emit the second pulse in another direction within a range of a predetermined angle that deviates from the emission direction of the first pulse corresponding to the determined echo signal.

The first pulse is a first single pulse or a first pulse sequence, and the second pulse is a second single pulse or a second pulse sequence.

When the first pulse is the first single pulse, energy of the first single pulse is the first energy; when the first pulse is the first pulse sequence, a sum of energy of all single pulses in the first pulse sequence is the first energy;
when the second pulse is the second single pulse, energy of the second single pulse is the second energy; and when the second pulse is the second pulse sequence, a sum of energy of all single pulses in the second pulse sequence is the second energy.

When the first pulse is the first single pulse, and the second pulse is the second single pulse, the energy of the first single pulse is less than or equal to a threshold of laser safety for human eyes, and the energy of the second single pulse is greater than the energy of the first single pulse.

When the first pulse is the first pulse sequence, and the second pulse is the second pulse sequence, the sum of the energy of all the single pulses in the first pulse sequence is less than or equal to the threshold of laser safety for human eyes, and the sum of the energy of all the single pulses in the second pulse sequence is greater than the sum of the energy of all the single pulses in the first pulse sequence.

When the first pulse is the first single pulse, and the second pulse is the second pulse sequence, the energy of the first single pulse is less than or equal to the threshold of laser safety for human eyes, and the sum of the energy of all the single pulses in the second pulse sequence is greater than the energy of the first single pulse.

When the first pulse is the first pulse sequence, and the second pulse is the second single pulse, the sum of the energy of all the single pulses in the first pulse sequence is less than or equal to the threshold of laser safety for human eyes, and the energy of the second single pulse is greater than the sum of the energy of all the single pulses in the first pulse sequence.

The first embodiment is a method embodiment corresponding to this embodiment, and this embodiment can be implemented in cooperation with the first embodiment. Related technical details mentioned in the first embodiment are still valid in this embodiment, and in order to reduce repetition, details are not described herein again. Correspondingly, related technical details mentioned in this embodiment may also be applied to the first embodiment.

It should be noted that, all method embodiments of the present invention may be implemented by using software, hardware, firmware, and the like. Regardless of whether the present invention is implemented by using software, hardware, or firmware, instruction codes may be stored in any type of computer-accessible memory (for example, a permanent or modifiable medium, a volatile or nonvolatile medium, a solid state or non-solid medium, or a fixed or replaceable medium). Similarly, the memory may be, for example, a programmable array logic (PAL), a random access memory (RAM), a programmable read-only memory (PROM), a read-only memory (ROM), an electrically erasable PROM (EEPROM), a disc, an optical disc, or a digital versatile disc (DVD).

It should be noted that, the units/modules provided in the device embodiments of the present invention are all logic units/modules. Physically, a logical unit may be a physical unit, or may be a part of a physical unit, or may be implemented by using a combination of a plurality of physical units. The physical embodiments of the logical units are not the most important, and a combination of the functions implemented by the logical units is the key to resolving the technical problems proposed in the present invention. In addition, to highlight the creative parts of the present invention, units not closely related to resolving the technical problems proposed in the present invention are not introduced in the device embodiments of the present invention, but this does not mean that no other units exist in the device embodiments.

It should be noted that, relational terms such as first and second in the claims and the specification of this patent are merely used to distinguish one entity or operation from another entity or operation rather than necessarily requiring or implying any such practical relationship or order between these entities or operations. Furthermore, terms "comprise", "include" or any other variants are intended to encompass non-exclusive inclusion, such that a process, a method, an article, or a device including a series of elements not only include those elements, but also includes other elements not listed explicitly or includes intrinsic elements for the process, the method, the article, or the device. Without any further limitation, an element defined by the phrase "comprising one" does not exclude existence of other same elements in the process, the method, the article, or the device that includes the elements.

Although the present invention has been illustrated and described with reference to some preferred embodiments of the present invention, those of ordinary skill in the art should understand that various changes may be made in forms and details without departing from the spirit and the scope of the present invention.

## Claims

1. A ranging method for a lidar system, comprising:
emitting a first pulse having a first energy;
receiving an echo signal corresponding to the first pulse;
determining, according to the echo signal, whether a preset distance has an obstacle; and
emitting a second pulse having a second energy in an emission direction of the first pulse corresponding to the determined echo signal when no obstacle is determined within the preset distance, the second energy being greater than the first energy, and not emitting the second pulse in the emission direction of the first pulse corresponding to the determined echo signal when an obstacle is determined within the preset distance.

2. The method according to claim 1, wherein the determining, according to the echo signal, whether a preset distance has an obstacle comprises:
calculating a time difference between a receiving time of the echo signal and an emitting time of the corresponding first pulse; and
determining whether the time difference is greater than a first preset time difference, wherein
an obstacle within the preset distance is determined when the time difference is greater than the first preset time difference, and an obstacle within the preset distance is not determined when the time difference is less than or equal to the first preset time difference.

3. The method according to claim 1 or 2, wherein when the second pulse is not emitted in the emission direction of the first pulse corresponding to the determined echo signal, the second pulse is not emitted in another direction within a range of a predetermined angle that deviates from the emission direction of the first pulse corresponding to the determined echo signal.

4. The method according to claim 3, wherein the first pulse is a first single pulse or a first pulse sequence, and the second pulse is a second single pulse or a second pulse sequence.

5. The method according to claim 4, wherein when the first pulse is the first single pulse, energy of the first single pulse is the first energy; when the first pulse is the first pulse sequence, a sum of energy of all single pulses in the first pulse sequence is the first energy;
when the second pulse is the second single pulse, energy of the second single pulse is the second energy; and when the second pulse is the second pulse sequence, a sum of energy of all single pulses in the second pulse sequence is the second energy.

6. The method according to claim 5, wherein when the first pulse is the first single pulse, and the second pulse is the second single pulse, the energy of the first single pulse is less than or equal to a threshold of laser safety for human eyes, and the energy of the second single pulse is greater than the energy of the first single pulse;
when the first pulse is the first pulse sequence, and the second pulse is the second pulse sequence, the sum of the energy of all the single pulses in the first pulse sequence is less than or equal to the threshold of laser safety for human eyes, and the sum of the energy of all the single pulses in the second pulse sequence is greater than the sum of the energy of all the single pulses in the first pulse sequence;
when the first pulse is the first single pulse, and the second pulse is the second pulse sequence, the energy of the first single pulse is less than or equal to the threshold of laser safety for human eyes, and the sum of the energy of all the single pulses in the second pulse sequence is greater than the energy of the first single pulse; and
when the first pulse is the first pulse sequence, and the second pulse is the second single pulse, the sum of the energy of all the single pulses in the first pulse sequence is less than or equal to the threshold of laser safety for human eyes, and the energy of the second single pulse is greater than the sum of the energy of all the single pulses in the first pulse sequence.

7. A lidar system, comprising an emitting unit, a receiving unit, a signal processing unit, and a control unit, wherein
the control unit is configured to control the emitting unit to emit a first pulse having a first energy;
the receiving unit is configured to receive an echo signal corresponding to the first pulse; the signal processing unit is configured to determine, according to the echo signal, whether a preset distance has an obstacle; and
when the signal processing unit determines that the preset distance has no obstacle, the control unit controls the emitting unit to emit a second pulse having a second energy in an emission direction of the first pulse corresponding to the determined echo signal, the second energy being greater than the first energy, and when the signal processing unit determines that the preset distance has an obstacle, the control unit controls the emitting unit not to emit the second pulse in the emission direction of the first pulse corresponding to the determined echo signal.

8. The system according to claim 7, wherein the signal processing unit determines, according to the echo signal, whether a preset distance has an obstacle comprises:
calculating a time difference between a receiving time of the echo signal and an emitting time of the corresponding first pulse; and
determining whether the time difference is greater than a first preset time difference, wherein
an obstacle within the preset distance is determined when the time difference is greater than the first preset time difference, and an obstacle within the preset distance is not determined when the time difference is less than or equal to the first preset time difference.

9. The system according to claim 7 or 8, wherein when the control unit controls the emitting unit not to emit the second pulse in the emission direction of the first pulse corresponding to the determined echo signal, the control unit controls the emitting unit not to emit the second pulse in another direction within a range of a predetermined angle that deviates from the emission direction of the first pulse corresponding to the determined echo signal.

10. The system according to claim 9, wherein the first pulse is a first single pulse or a first pulse sequence, and the second pulse is a second single pulse or a second pulse sequence.
